# EUROPEAN PATENT APPLICATION

(11) **EP 3 845 399 A1**
(43) Date of publication of application: **07.07.2021**
(21) Application number: 19397535.6
(22) Date of filing: 31.12.2019
(51) Int. Cl.: B60C 19/08

(54) **A TIRE**

(71) Applicant: Nokian Renkaat Oyj, 37101 Nokia (FI)
(72) Inventor: LEPISTÖ, Samu, 33500 Tampere (FI); HILLMAN, Leo, 33820 Tampere (FI); OJALA, Jari, 37130 NOKIA (FI); ILOMÄKI, Jouko, 37100 Nokia (FI); HELIN, Sami, 37140 Nokia (FI); LEHTONEN, Mikko, 37120 Nokia (FI); KULMALA, Jarkko, 37120 Nokia (FI); HAAPANIEMI, Antero, 33500 Tampere (FI)
(74) Representative: Berggren Oy

(57) **Abstract**

The invention relates to a pneumatic tire (100) configured to rotate about an axis of rotation (AXR), the tire (100) comprising a circumferential tread (120) being configured to form a contact with a surface (900) when the tire (100) is used, a circumferential belt layer (140) disposed radially below the tread, a first bead region (151) and a second bead region (152), which bead regions (151, 152) are spaced apart, wherein the first bead region (151) has a first mounting surface and the second bead region (152) has a second mounting surface, which mounting surfaces are adapted for mounting the tire on a rim of a wheel, a first sidewall (145a) extending between the first bead region (151) and the tread (120) and a second sidewall (145b) extending between the second bead region (152) and the tread (120), a carcass ply (155) extending between the first bead region (151) and the second bead region (152), and at least one electrically conductive cord (10) comprising electrically conductive fibers, which electrically conductive cord (10) extends from the first bead region (151) to said tread (120), and/or to said circumferential belt layer (140), and/or to said second bead region (152), thereby providing a path of increased electrical conductivity via the electrically conductive cord (10), wherein the electrically conductive fibers have a length from 1 mm to 100 mm, preferably from 10 mm to 70 mm, and a diameter from 1 µm to 100 µm, preferably from 3 µm to 50 µm.

## Description

### Technical field

The invention relates to a pneumatic tire containing at least one electrically conductive cord.

### Background

A wheel-rim mounting surface is conventionally provided in the bead region of the tire, which is designed to contact a rigid metal rim onto which the tire is mounted to create a tire-wheel assembly. The bead region of the tire normally includes at least one rubber component having a tire mounting surface, for example a chafer/toe guard component, which is designed to be rim-contacting, and therefore a mounting surface of the tire.

The tire carcass is normally composed of one or more plies encompassed by a rubber composition. The carcass ply(ies) typically extend from bead-to-bead through a crown region of the tire.

The tire further comprises a tread component of a pneumatic tire, which is designed to provide a running surface of the tire for ground-contacting purposes.

Conventionally, the outer visible rubber layer of the tire sidewalls is of a rubber composition. The sidewalls may be reinforced with a rubber reinforcing carbon black content to be relatively electrically conductive in a manner that a suitable path of least electrical resistance is thereby provided from its wheel-rim mounting surface rubber component to the tread portion. However, the rubber reinforcing carbon black, if used in the sidewalls, can increase rolling resistance and decrease durability of the tire itself. On the other hand, the reduction in carbon black content in the outer sidewall layer can significantly reduce the electrical conductivity of the tire sidewall layer, which, in turn, can result in significantly reducing or even eliminating the path of electrical conductivity between the tire's bead region and the tire's tread region.

### Summary

This invention relates to a pneumatic tire comprising an electrically conductive cord. The novel pneumatic tire comprises electrically conductive fibers in the electrically conductive cord. Aspects of the invention are characterized by what is stated in the independent claims. Some preferred embodiments are disclosed in the dependent claims. These and other embodiments are disclosed in the description and figures.

The pneumatic tire is configured to rotate around an axis of rotation. The tire comprises
- a circumferential tread which is being configured to form a contact with a surface when the tire is used,
- a circumferential belt layer disposed radially below the tread,
- a first bead region and a second bead region, which bead regions are spaced apart, wherein the first bead region has a first mounting surface and the second bead region has a second mounting surface, which mounting surfaces are adapted for mounting the tire on a rim of a wheel,
- a first sidewall extending between the first bead region and the tread,
- a second sidewall extending between the second bead region and the tread,
- a carcass ply extending between the first bead region and the second bead region, and
- at least one electrically conductive cord comprising electrically conductive fibers.

The electrically conductive cord extends from the first bead region to
- said tread, and/or
- to said circumferential belt layer, and/or
- to the second bead region,
thereby providing a path of increased electrical conductivity via the electrically conductive cord.

The electrically conductive fibers can have
- a length from 1 mm to 100 mm, preferably from 10 mm to 70 mm,
- a diameter from 1 µm to 100 µm, preferably from 3 µm to 50 µm, and
- length/diameter ratio from 100 to 10 000.

Said ranges can help to obtain the desired performance. For example, the electrically conductive fibers having said length, diameter and length/diameter ratio can be used to improve fatigue resistance of the electrically conductive cord. Further, the electrically conductive fibers can improve electrical conductivity of the tire.

Thus, thanks to the present solution, it is possible to improve electrical conductivity of the tire without substantially affecting other properties of the tire.

The electrically conductive cord comprising the fibers can have reduced fatigue comparing to an electrically conductive cord comprising continuous filaments, i.e., due to the electrically conductive fibers the electrically conductive cord may not break easily.

Further, the novel solution is easy to be added to the conventional manufacturing process of tires because adding the electrically conductive cord comprising the electrically conductive short fibers may only have a minor effect on the manufacturing process of the tire.

Advantageously, the electrically conductive cord comprising said fibers extends at least from the first bead region to said circumferential belt layer. Thus, the resistance from the first bead region to the circumferential belt layer can be decreased. Most advantageously, the electrically conductive cord extends from the first bead region to the second bead region. Therefore, the electrical resistance between the bead regions can be decreased.

The amount of said electrically conductive fibers can be at least 1 wt.%, such as from 1 wt.% to 100 wt.% calculated of total weight of the electrically conductive cord. Preferably, the amount of electrically conductive fibers is equal to or more than 15 wt.%. The electrically conductive fibers can improve the electrical conductivity of the cord. Further, the electrically conductive fibers can reduce the fatigue of the electrically conductive cord. The effect of the electrically conductive fibers on the electrically conductive cord increases as the amount of the electrically conductive fibers increases. Thus, in order to improve the fatigue resistance of the electrically conductive cord, the amount of electrically conductive fibers is equal to or more than 18 wt.%, more preferably equal to or more than 20 wt.%, calculated of total weight of the electrically conductive cord.

The electrically conductive fibers of the electrically conductive cord can comprise or consist of metals. The amount of the metals can be equal to or more than 30 wt.%, preferably equal to or more than 50 wt.% calculated of the total weight of said electrically conductive fibers. Said metals can comprise, for example,
- copper, and/or
- silver and/or
- steel, e.g. stainless steel.

Electrically conductive fibers comprising or consisting of metals can be particularly suitable for improving electrical conductivity of the electrically conductive cord.

Alternatively, or in addition, the electrically conductive fibers can comprise
- carbon fibers, and/or
- poly aniline fibers, and/or
- other electrically conductive polymer fibers.

The electrically conductive cord can comprise equal to or more than 30 wt.%, preferably equal to or more than 40 wt.% these electrically conductive fibers, calculated of the total weight of said electrically conductive fibers. Electrically conductive fibers comprising or consisting electrically conductive polymer fibers can be used for improving electrical conductivity of the electrically conductive cord and/or improving fatigue resistance of the electrically conductive cord.

The electrically conductive cord can comprise a yarn. The electrically conductive fibers, or at least part of the electrically conductive fibers, can be within the yarn, e.g. at least partly inside the yarn. Alternatively, or in addition, the electrically conductive fibers, or at least part of the electrically conductive fibers, can be spirally wound around the yarn. The yarn can comprise, for example,
- aramid, and/or
- nylon, and/or
- rayon, and/or
- polyester and/or
- cotton and/or
- polysulfone.

A resistance of the tire from the first bead region to the tread and/or to the second bead region can be less than 500 MΩ, such as equal to or less than 100 MΩ, preferably less than 50 MΩ, such as equal to or less than 15 MΩ, more preferably less than 10 MΩ, and most preferably less than 8 MΩ, such as equal to or less than 5 MΩ. The smaller the resistance the better for the tire. Thanks to the electrically conductive cord having the electrically conductive fibers, a very small resistance of the tire, such as 1 MΩ, can be obtained. The resistance of the tire can depend on e.g. the amount of electrically conductive fibers on the electrically conductive cord, the material(s) of the electrically conductive fibers, the position of the electrically conductive cord, and the Tex value of the electrically conductive cord.

One or more than one electrically conductive cord can be positioned
- on the outer surface of a carcass ply, between the carcass ply and a sidewall rubber layer, and/or
- on the inner surface of a carcass ply, between the carcass ply and the an innerliner layer, and/or
- between two carcass plies, and/or
- as an integral cord of at least one of the carcass plies
in order to provide suitable path of least electrical resistance from the first bead region to
- the tread, and/or
- to the circumferential belt layer, and/or
- to the second bead region.

If the electrically conductive cord is positioned between two carcass plies, or as an integral cord of at least one of the carcass plies, the fatigue of the electrically conductive cord can be reduced.

Advantageously, the electrically conductive cord is positioned on the outer surface of the carcass ply, between the carcass ply and the sidewall rubber layer. This may further improve the electrical conductivity of the path of least electrical resistance from the first bead region to the tread of the tire.

Advantageously, the electrically conductive cord is arranged to be inside the tire, i.e., it does not extend to an outer surface of the tire. Thus, the electrically conductive cord is not easily damaged.

The electrically conductive fibers can have a conductivity between 1.0 x 10³ σ (S/m) at 20°C and 8.0 x 10⁷ σ (S/m) at 20°C, preferably the electrically conductive fibers have a conductivity equal to or more than 1.0 x 10⁵ σ (S/m) at 20°C in order to improve the conductivity of the electrically conductive cord.

Advantageously, the electrically conductive fibers have a length equal to or less than 80 mm, more preferably equal to or less than 60 mm and most preferably equal to or less than 50 mm. Therefore, the length of the electrically conductive fibers can be small enough to improve the fatigue resistance of the electrically conductive cord. The cord having said electrically conductive fibers may not break easily. Further, the electrically conductive fibers can have a length equal to or more than 5 mm, more preferably equal to or more than 10 mm, and most preferably equal to or more than 20 mm. Therefore, the electrically conductive fibers can have a length which can improve the fatigue resistance of the electrically conductive cord and still maintain suitable strength properties for the electrically conductive cord. The length of the electrically conductive fibers can influence the electrical conductivity of the electrically conductive cord. Further, the length of the electrically conductive fibers can have an effect on the fatigue resistance of the electrically conductive cord.

The electrically conductive cord can have Tex value from 10 to 500 Tex, preferably the Tex value of the electrically conductive cord is equal to or more than 50 Tex and/or equal to or less than 300 Tex. The electrically conductive cord has preferably small Tex value, i.e., small weight, but it should have strength which allows it to handle operating conditions, such as forces caused by environments of the tire during operating hours of the tire.

The tire can comprise one or more than one electrically conductive cord. Preferably, the tire comprises 1 to 5 electrically conductive cords. More preferably, the tire comprises one or two electrically conductive cords for easy and cost-effective manufacturing process of the tire.

In an embodiment, the electrically conductive fibers are formed by coating fibers with a conductive substance, such as coating a nylon yarn with silver coating. In this case, thickness of the electrically conductive coating on the fibers is preferably form 0.02 mm to 0.1 mm. In this embodiment, the fibers can comprise e.g. nylon, rayon, vinylon, polyethylene, polystirene, poly-vinyl chloride, polyvinylidene chloride, aromatic polyamide, polyester such as polyethylene terephthalate (PET), polypropylene, cellulose pulp, plant fibers made of cellulose, glass and/or alumina. Preferably, the fibers comprise nylon fibers, polyester fibers and/or fibers made from cellulose containing pulp. The electrically conductive substance preferably comprises metal(s).

Thanks to the present solution, a tire having an electrically conductive cord having good conductivity and improved fatigue resistance can be obtained. Thanks to the electrically conductive fibers of the electrically conductive cord, the electrically conductive cord may not break easily.

### Brief description of the drawings

- Figs 1a-b: illustrate an example of a tire comprising at least one electrically conductive cord comprising electrically conductive fibers,
- Fig. 2: illustrate, in a half cross section, an example of a tire comprising at least one electrically conductive cord comprising electrically conductive fibers,
- Fig. 3a: illustrates, in a half cross section of a part of a tire, an example location of at least one electrically conductive cord comprising electrically conductive fibers,
- Fig. 3b: illustrates, in a half cross section of a part of a tire, example locations of other electrically conductive areas of a tire comprising at least one electrically conductive cord comprising electrically conductive fibers,

The Figures are intended to illustrate the general principles of the disclosed solution. Therefore, the illustrations in the Figures are not necessarily in scale or suggestive of precise layout of system components.

### Detailed description

In the text, references are made to the Figures with the following numerals and denotations:
- 10: electrically conductive cord,
- 20: contact patch,
- 100: tire,
- 110: tread block,
- 114: tread pattern,
- 120: tread of tire,
- 121: an electrically conductive strip, such as a rubber strip,
- 130: inner surface of tire,
- 135: innerliner,
- 140: circumferential belt layer,
- 145: outer sidewall,
- 150: bead region,
- 151: first bead region,
- 152: second bead region,
- 155: carcass ply,
- 900: contact surface such as a road,
- AXR: axis of rotation of tire,
- SC: circumferential direction, and
- SR: radial direction

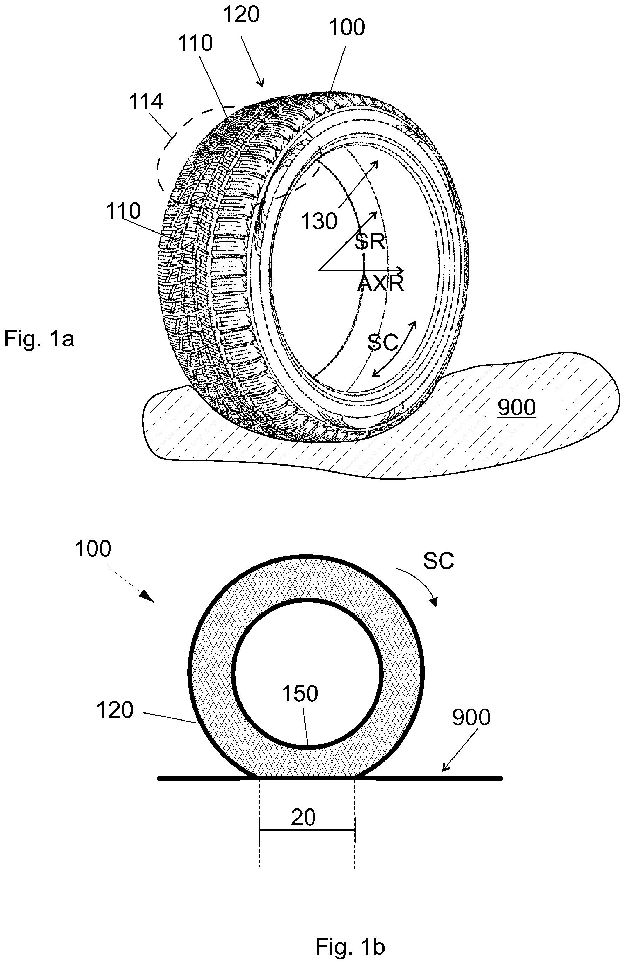

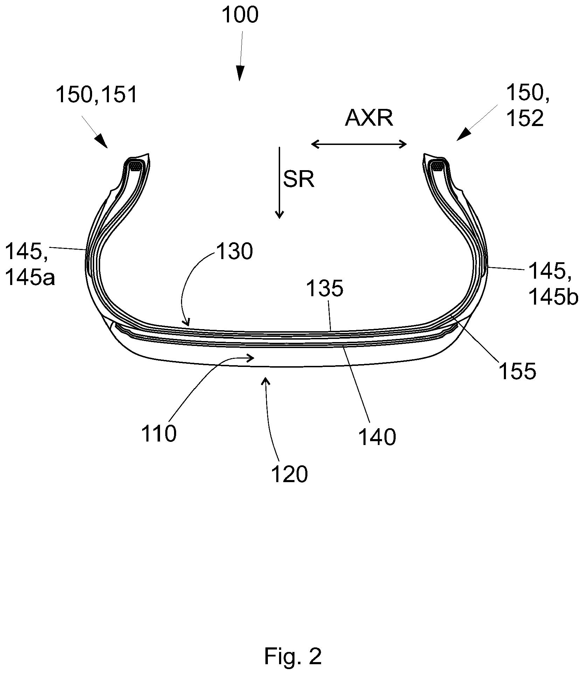

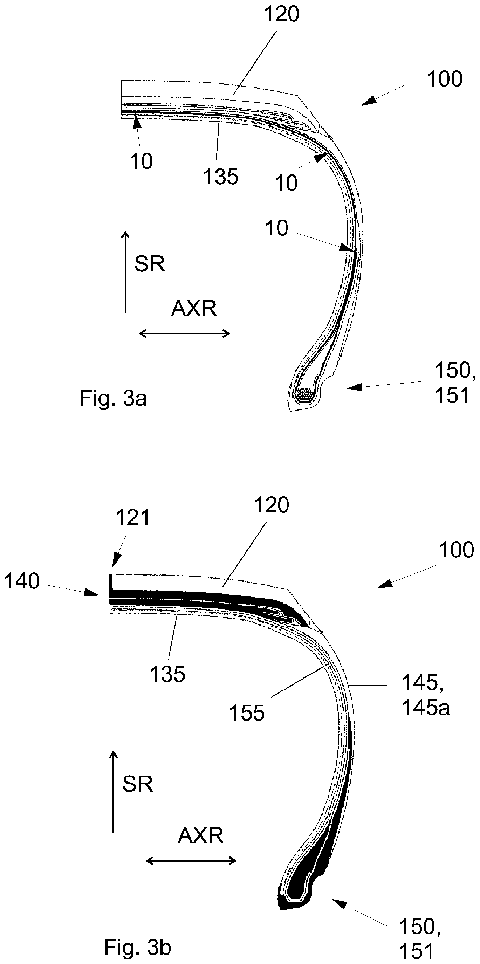

Figures 1-3b disclose a tire, or at least a part of a tire, comprising an electrically conductive cord 10, which comprises electrically conductive fibers.

The tire 100 can be a pneumatic tire. Such a tire may be, for example, a tire for a passenger motor vehicle, such as a passenger car or a motorcycle. Such a tire 100 may be, for example, a so-called heavy tire, for a heavy machine such as a truck, a caterpillar, a harvester or a front loader. As is known, such a tire 100 may rotate around an axis of rotation AXR.

Such a tire 100 typically comprises a tread 120, which is in contact with a surface 900 such as a road surface during the normal use of the tire 100. Such a tread 120 typically comprises a tread pattern 114 which comprises a plurality of tread blocks 110. The tread rubber can be disposed radially outside the belt layer 140 to form the tread portion.

The tread can be configured to form a contact with a surface 900 when the tire 100 is used. An area of the contact of the tread 120 with the surface 900 forms a contact patch 20. Thus, the contact patch refers to a portion of a motor vehicle's tire 100 that is in contact with a surface 900. Thus, it is the portion of the tire's tread that touches the surface 900, such as a road. Typically, the contact patches of the tires 100 of the motor vehicle are the only connections between the road and the motor vehicle. The contact patch can also be called as footprint of the tire. When the tire 100 is used, a path of increased electrical conductivity can be provided from the first bead region to the surface 900 at least partly via the electrically conductive cord 10.

The tire can comprise a reinforcing belt, i.e., circumferential belt layer 140, which is arranged between the inner surface of the tire 130 and the tread 120. Since the purpose of the reinforcing belt is to reinforce the tire, preferably, the reinforcing belt does not limit large apertures. More precisely, preferably, the reinforcing belt does not limit an aperture having an area of at least 0.5 cm².

The circumferential belt layer 140, i.e., a reinforcing belt, is typically electrically conductive. The circumferential belt layer 140 can comprise metal. The circumferential belt layer 140 may comprise steel, or it may consist of steel. The circumferential belt layer 140 may be a wire like structure arranged inside the tire 100. The reinforcing structure of the circumferential belt layer 140 may comprise a steel mesh. In addition, or alternatively, the circumferential belt layer 140 may comprise fibrous material. The fibrous material of the circumferential belt layer 140 may comprise at least one of cotton, rayon, polyamide (Nylon), polyester, polyethylene terephthalate, and Poly-paraphenylene terephthalamide (Kevlar).

The circumferential belt layer 140 is typically an electrically conductive layer of the tire. Therefore, it can form a part of the electrically conductive path.

The tire has a first bead region 151 and a second bead region 152, which bead regions 151, 152 are spaced apart. The first bead region 151 can have a first mounting surface and the second bead region 152 can have a second mounting surface. The mounting surfaces are adapted for mounting the tire on a rim of a wheel. The bead regions can comprise a steel cable coated with rubber. The bead regions have suitable strength to stay seated on the rim of a wheel.

The bead regions can comprise at least one rubber component having a tire mounting surface, for example a chafer and/or toe guard component, which is designed to be rim-contacting, and therefore a mounting surface of the tire. Such mounting surface rubber composition can comprise a significant rubber reinforcing carbon black content and can thereby be relatively electrically conductive.

The body of the tire 100 is typically made of layers of different fabrics, which are called plies. In this application, the term "ply" refers to a material layer, typically a textile layer, used in the tire. The tire typically comprises several layers of plies. Plies can give strength to the tire and improve a resistance of the tire to road damage. Passenger tires typically have two body plies, truck tires have typically several body plies. The body plies typically run from the first bead region to the second bead region. Ply fabric can be made of e.g. polyester. The plies can be coated with rubber to seal the tire and to bond the layers with each other.

The tire can comprise a carcass ply 155. The carcass ply 155 can improve the strength of the tire, particularly in the sidewall areas 145. The carcass ply 155 can be a rubber-coated fabric. The carcass ply(ies) typically extend from the first bead region to the second bead region.

The carcass ply/plies 155 may comprise fibrous material. The fibrous material of the carcass ply 155 can comprise
- cotton, and/or
- rayon, and/or
- polyamide (Nylon), and/or
- polyester, and/or
- polyethylene terephthalate, and/or
- Poly-paraphenylene terephthalamide (Kevlar).

The purpose of the carcass ply 155 can be to reinforce the tire 100, hence, the carcass ply 155 can give strength to the tire.

The tire 100 further comprises an outer sidewall 145. The outer sidewalls of the tire can be used to protect the side of the tire e.g. from the road. The outer visible tire sidewalls 145 can be of a rubber composition. The outer sidewalls 145 can comprise a rubber composition, which can be relatively electrically nonconductive. Thus, the outer sidewalls 145 of the tire 100 can be relatively electrically nonconductive. Thanks to the relatively electrically nonconductive material of the outer sidewall 145, hysteresis of the tire 100 can be reduced, hence, the tire 100 can be less hysteretic. A lower hysteretic outer tire sidewall 145 can cause a lower rolling resistance for the tire with an associated beneficial increase in fuel economy for a vehicle and durability of the tire itself.

The inner liner 135 of the tire is typically an airtight layer of rubber.

In this application, the term "phr" relates to parts by weight of an ingredient per 100 parts by weight of rubber, unless otherwise indicated.

In this application, the term "carbon black" is used to refer to rubber reinforcing carbon blacks unless otherwise indicated. The term "carbon black" is known by a person skilled in the art.

In this application, the term "electrically conductive path" refers to an electrical path of least electrical resistance. The electrically conductive path can extend from a mounting surface of a rubber component in the first bead region 151 of the tire to the running surface 900 of the tire tread 120.

In this application, the term "electrically conductive short fibers" as well as the term "electrically conductive fibers" refers to fibers having a length from 1 mm to 100 mm, a diameter from 1 µm to 100 µm, and length/diameter ratio preferably from 100 to 10 000.

Advantageously, the electrically conductive fibers have a length equal to or less than 70 mm, more preferably equal to or less than 60 mm. The shorter the electrically conductive fibers are, the better the durability of the electrically conductive cord may be, i.e., the fatigue resistance of the electrically conductive cord can be improved. Further, the electrically conductive fibers preferably have a length equal to or more than 5 mm, more preferably equal to or more than 10 mm. The inner structure of the electrically conductive cord may be improved, if the electrically conductive fibers have the length of at least 5 mm. The length of the electrically conductive fibers is preferably at least 10 mm. Adequate length of the electrically conductive fibers allows better coherence of the fibers, which in turn may improve electrical conductivity of the electrically conductive cord.

Preferably, the electrically conductive fibers have a diameter of equal to or more than 3 µm, more preferably equal to or more than 6 µm. Thus, the strength as well as the conductivity of the electrically conductive fibers may be improved. Further, if the fibers are too fine, they may be difficult to handle. Further, the electrically conductive fibers preferably have a diameter of equal to or less than 50 µm, more preferably equal to or less than 25 µm, and most preferably equal to or less than 15 µm. This may improve the manufacturing costs of the electrically conductive cord as well as improve the inner structure of the electrically conductive cord.

Preferably, the length/diameter ratio of the electrically conductive fibers is from 300 to 5 000 to improve the effect of the electrically conductive fibers on the electrically conductive cord, more preferably the length/diameter ratio of the electrically conductive fibers is equal to or more than 500. Further, the length/diameter ratio of the electrically conductive fibers is preferably equal to or less than 4 000. This may further improve the effect of the electrically conductive fibers on the electrically conductive cord. For example, said range may improve properties of the electrically conductive fibers and, hence, improve the conductivity and/or the fatigue resistance of the electrically conductive cord.

The electrically conductive cord can have at least 1 wt.% of electrically conductive fibers. The electrically conductive fibers may improve the electrical conductivity of the cord. Further, the electrically conductive fibers can improve the fatigue resistance of the electrically conductive cord. The effect of the electrically conductive fibers on the electrically conductive cord increases as the amount of the electrically conductive fibers increases. Thus, the amount of electrically conductive fibers is preferably equal to or more than 5 wt.%, more preferably equal to or more than 10 wt.%, such as at least 15 wt.%, and most preferably equal to or more than 20 wt.%. The electrically conductive cord may have the electrically conductive fibers up to 100 wt.%, but preferably, in order to improve the strength properties of the electrically conductive cord, the electrically conductive cord has electrically conductive fibers equal to or less than 80 wt.%, more preferably equal to or less than 70 wt.% such as from 15 wt.% to 70 wt.%, calculated of total weight of the electrically conductive cord.

The tire 100 contains at least one electrically conductive cord 10 comprising electrically conductive fibers, which electrically conductive cord 10 can extend between the first bead region 151 and
- the tread 120, and/or
- circumferential belt layer 140, and/or
- the second bead region 152
to provide a path of least electrical resistance. An electrically conductive path can thereby be provided between the rim (not shown) and the surface 900.

The electrically conductive cord 10 comprising the electrically conductive fibers can be manufactured directly to the tire 100 during manufacturing process of the tire.

The electrically conductive cord 10 comprises the electrically conductive short fibers. Thus, the electrically conductive cord comprising the electrically conductive short fibers can provide a path of least electrical resistance between the tire bead region 151, 152 and the tire tread region 120. Thanks to the electrically conductive short fibers, it can be possible to use relatively inextensible material, such as metal, for the electrically conductive cord. Further, the electrically conductive short fibers can be used to improve fatigue resistance of the electrically conductive cord 10, even with substantially inextensible material. Furthermore, the electrically conductive short fibers can improve the electrical conductivity of the electrically conductive cord 10.

The electrically conductive cord 10 can comprise electrically conductive short metal fibers. Advantageously, the amount of metals is equal to or more than 30 wt.%, more preferably equal to or more than 70 wt.%, and most preferably, equal to or more than 80 wt.%, calculated of the total weight of the electrically conductive fibers. The metal can be particularly good material to improve the conductivity of the cord 10.

In an advantageous embodiment, the electrically conductive cord 10 comprises electrically conductive short metal fibers, electrically conductive short carbon fibers, or their combination.

Due to the short length of the electrically conductive fibers, fatigue of the electrically conductive cord 10 can be reduced during the working hours of the tire 100. The electrically conductive fibers can comprise or consists of
- carbon, and/or
- iron alloy, e.g. stainless steel, and/or
- copper, and/or
- brass, and/or
- silver, and/or
- conductive polymers which principal chain has pi-electron conjugation, e.g. polypyrrole, polyaniline, alkylenoxide.

The amount of above-mentioned materials is preferably equal to or more than 70 wt.%, more preferably equal to or more than 80 wt.%, and most preferably equal to or more than 90 wt.%, calculated of the total weight of the electrically conductive fibers in the electrically conductive cord.

Tex is a unit of measure for the linear mass density of fibers and yarns and is defined as the mass in grams per 1000 meters. The Tex value is known by the skilled person.

The electrically conductive cord 10 can have a Tex value from 10 to 500 Tex, preferably equal to or more than 50 Tex and/or equal to or less than 300 Tex. Said Tex value can improve the strength properties of the electrically conductive cord and, further, be substantially easy and cost efficient solution for the electrically conductive cord 10. The electrically conductive cord 10 can have a substantially small weight and substantially small Tex value to decrease manufacturing costs. However, the electrically conductive cord 10 needs to have a such Tex value which allows the electrically conductive cord to handle operating conditions during operating hours of the tire.

The electrically conductive cord is preferably substantially thin. However, the electrically conductive cord preferably has good fatigue resistance properties. Thus, the electrically conductive cord may have a thickness from 0.2 mm to 2.0 mm, preferably from 0.3 mm to 0.9 mm or from 0.3 mm to 0.5 mm.

The electrically conductive cord 10 can comprise, not only the electrically conductive fibers, but also other kinds of fibers, such as organic fibers, particularly synthetic fibers, such as, for example and not intended to be limiting, aramid, nylon, rayon, polyester, ultra-high molecular weight polyethylene (UHMWPE) or cotton or blend of such fibers. However, the electrically conductive cord always comprises the electrically conductive fibers, which electrically conductive fibers can be providing, at least partly, the electrical conductivity of the electrically conductive cord.

The electrically conductive cord 10 can comprise a yarn. The electrically conductive fibers, or at least part of them, can be arranged inside the yarn. Alternatively, or in addition, the electrically conductive fibers, or at least part of them, can be e.g. spirally (helically) wound around the yarn. These embodiments can improve the fatigue resistance of the electrically conductive cord. The yarn can comprise, for example,
- aramid, and/or
- nylon, and/or
- rayon, and/or
- polyester and/or
- cotton and/or
- polysulfone.

In an embodiment, the electrically conductive fibers are formed by coating substantially nonconductive fibers with a conductive substance, such as coating a nylon yarn with silver coating. In this case, the thickness of the coating is preferably from 0.02 mm to 0.2 mm, more preferably from 0.05 mm to 0.1 mm. The quantity of the conductive substance for the coating can be e.g. in the range of equal to or less than 1 parts by weight with respect to 100 parts by weight of said electrically conductive fibers.

The substantially nonconductive fibers can comprise nylon, rayon, vinylon, polyethylene, polystirene, poly-vinyl chloride, polyvinylidene chloride, aromatic polyamide, polyester such as polyethylene terephthalate (PET), polypropylene, cellulose pulp, plant fibers made of cellulose, glass and/or alumina. Preferably, said fibers comprise nylon fibers, polyester fibers and/or fibers made from cellulose containing pulp. Especially nylon fibers are preferable for their superior extensibility, flexibility and strength.

In the embodiment wherein the fibers are coated with a conductive substance, the conductive substance preferably comprises metal, but it can alternatively or in addition comprise e.g. carbon and/or conductive polymers. The conductive substance can comprise e.g. steel (an iron alloy and including stainless steel) and/or copper, and/or brass. For example, metal salts can be used as the conductive substance. If the conductive substance is a metal salt, the conductive coating can be formed e.g. by using electroplating / vacuum evaporation method.

If the conductive substance comprises conductive polymer(s), the conductive polymer can have a principal chain which has pi-electron conjugation, for example, polypyrrole, polyaniline, alkylenoxide or the like. The conductive coating comprising conductive polymer(s) can be formed by polymerizing monomers in the existence of the fibers.

Preferably, the electrically conductive cord 10 is not physically extending to, and therefore can be exclusive of and not a part of, an outer (visible) surface of the tire. Therefore, the electrically conductive cord can be protected by the outer surface of the tire and, hence, may not break easily. Preferably, the electrically conductive cord is not physically extending to the running surface of the tire and, also, may not extend to the mounting surface of the tire and thereby may not actually contact the wheel rim (not shown) onto which the tire is to be mounted.

The electrical resistance of the electrically conductive cord can depend on the amount of the electrically conductive fibers, the material of the electrically conductive fibers, the length of the electrically conductive fibers, the diameter of the electrically conductive fibers, and the length of the electrically conductive cord itself. The electrically conductive cord comprising the electrically conductive fibers can have an electrical resistance significantly less than 100 ohms, such as less than 5 ohms. Preferably, the electrical resistance of the electrically conductive cord is less than 50 ohms, such as equal to or less than 30 ohms, more preferably equal to or less than 20 ohms, and most preferably equal to or less than 10 ohms.

The electrical resistance of the tire between the tread 120 and the rim of the wheel is preferably less than 1X10⁸ Ω.

Therefore, the electrically conductive fibers can have a conductivity between 1.0 x 10³ σ (S/m) at 20°C and 8.0 x 10⁷ σ (S/m) at 20°C, preferably the electrically conductive fibers have a conductivity equal to or more than 1.0 x 10⁵ σ (S/m) at 20°C in order to improve the conductivity of the electrically conductive cord.

The rubber compositions of the bead component(s) and/or the tread rubber layer can comprise a rubber reinforcing carbon black content of at least 40 phr. Thus, the rubber compositions of the bead component(s) and/or the tread rubber layer can be relatively electrically conductive. Thus, the relatively electrically conductive rubber composition of the bead region 151 and/or the tread 120 can be a part of the electrically conductive path.

Alternatively, or in addition, the tire may have a strip 121, such as a rubber strip, extending through a relatively electrically nonconductive rubber, such as a nonconductive tread, which strip 121 have an increased electrical conductivity. Thus, the strip 121, such as a rubber strip having increased electrical conductivity, can be a part of the electrically conductive path.

If the tire tread 120 having the running surface is relatively electrically nonconductive, means can be provided for a path of reduced electrical resistivity to extend to the outer running surface of said tread layer. Said means of providing a path of reduced electrical resistivity may be provided, for example, by the above-mentioned rubber strip 121, which rubber strip 121 can comprise carbon black-rich rubber composition which can contain at least 40 phr, preferably at least 50 phr of carbon black. Said rubber strip 121 can be positioned through, or at least partly through, the tread 120.

The tire can comprise
- rubber of the carcass ply(ies) 155, and/or
- rubber of the tire innerliner layer 135, and/or
- rubber of the outer rubber sidewall layers 145,
which rubber(s) can be relatively electrically non-conductive because of their limited rubber reinforcing carbon black contents.

The novel tire comprises an electrical path of least electrical resistance, which can extend from the first bead region 151 and/or the second bead region 152 of the tire 100 to the running surface 900 of the tire tread 120.

Thus, the electrically conductive path, i.e., the path of least electrical resistance, can extend from the mounting surface of an electrically conductive rubber component in the bead region 150 of the tire to said electrically conductive cord 10, and through said belt layer 140 to the running surface 900 of said tire tread 120. Therefore, the electrically conductive path can be formed between the rim of the wheel and the surface 900 of a road.

The rubber compositions of the tire bead region 151, 152 can provide a mounting surface of the tire where said mounting surface is adapted to contact a metal rim to form a tire - rim assembly. For example, a tire chafer and toe guard may be used to provide a tire mounting surface for mounting the tire on the metal rim. The rubber composition of the tire bead region 151, 152 can be relatively electrically conductive.

Figures 1a to 3b illustrate some examples of a tire comprising an electrically conductive cord which comprises electrically conductive fibers.

As discussed above, the tire can comprise
- a circumferential tread 120 which is being configured to form a contact with a surface 900 when the tire 100 is used,
- a circumferential belt layer 140 disposed radially below the tread 120,
- a first bead region 151 and a second bead region 152, which bead regions are spaced apart, wherein the first bead region 151 has a first mounting surface and the second bead region 152 has a second mounting surface, which mounting surfaces are adapted for mounting the tire on a rim of a wheel,
- a first sidewall 145a extending between the first bead region 151 and the tread 120 and a second sidewall 145b extending between the second bead region 152 and the tread 120, and
- a carcass ply 155 extending between the first bead region 151 and the second bead region 152.

The tire further comprises at least one electrically conductive cord 10 comprising electrically conductive fibers. The electrically conductive cord 10 extends from the first bead region 151
to
- said tread 120, and/or
- to said circumferential belt layer 140, and/or
- to the second bead region 152,
thereby providing a path of increased electrical conductivity via the electrically conductive cord. The conductivity of the electrically conductive cord is at least partly based on the electrically conductive fibers. Thanks to the electrically conductive fibers, fatigue resistance of the electrically conductive cord can be improved. Further, electrical conductivity of the electrically conductive cord can be improved.

The electrically conductive cord 10 can be positioned on the outer surface of the carcass ply 155 and thereby on the inside of the outer sidewall layer. Thus, the electrically conductive cord 10 can be positioned between the carcass ply 155 and outer sidewall layer 145 extending from the bead region(s) 151, 152 to the rubber coating of the rubber coated belt layer 140, which can be juxta positioned to the tread 120. The electrically conductive cord 10 can thereby be positioned between the carcass ply 155 and the rubber sidewall 145. Thus, the electrical conductivity of the electrically conductive cord 10 can be improved.

The electrically conductive cord 10 can be positioned on an inner surface of the carcass ply 155. Thus, the electrically conductive cord 10 can be positioned between the carcass ply 155 and tire innerliner 135 in a manner that it extends from the bead regions 151, 152 of the tire 100 to thereby provide a path of least electrical resistance. Thus, the fatigue of the electrically conductive cord 10 can be reduced.

The electrically conductive cord 10 can be positioned as an integral cord of the carcass ply 155. Thus, the electrically conductive cord 10 can therefore be extending from the tread 120 to the bead region 151, 152, thereby providing a path of least electrical resistance therebetween. Thus, the fatigue of the electrically conductive cord 10 can be reduced.

As discussed above, the outer sidewall layer 145 can be a rubber composition having a relatively low electrical conductivity. Further, the rubber compositions of the bead regions 150 can have a relatively high electrical conductivity. Further, a rubber of the belt layer 140 can also have a relatively high electrical conductivity.

The tread 120, or at least part of the rubber compositions of tread, such as the strip 121, can also have a relatively high electrical conductivity.

Thus, the electrically conductive cord 10 can provide a path of increased electrical conductivity (reduced electrical resistance) between said bead region 151 and the belt layer 140 so that the path of increased electrical conductivity can extend from the bead region 151 to the tread 120.

Preferably, the carbon black-rich rubber compositions themselves make the contact with the surface 900, such as a road, and the tire mounting surface, thereby completing the electrical path of reduced electrical resistivity between the tire mounting surface and tire running surface.

The novel solution can provide a path of increased electrical conductivity (and path of least electrical resistance) extending between the bead region(s) 151, 152 and the tread 120 of the tire via the electrically conductive cord 10. As discussed above, such electrically conductive cord 10 may be positioned on an outer surface of a carcass ply 155 and thereby between the carcass ply 155 and the outer sidewall 145. Alternately, or in addition, the electrically conductive cord may be positioned on an inner surface of a carcass ply 155 and thereby between the carcass ply 155 and an innerliner 135. In this case, the rubber composition of the carcass ply is preferably relatively electrically conductive. Alternately, or in addition, the electrically conductive cord may be positioned between two carcass plies. In this case, the rubber composition of the outer carcass ply is preferably relatively electrically conductive. Alternately, or in addition, the electrically conductive cord may be positioned as an integral cord of at least one of the carcass plies.

The electrically conductive cord 10 can have one or more than one type of electrically conductive fibers. Therefore, the electrically conductive cord can have a portion of electrically conductive fibers and a second portion of the electrically conductive fibers, which can have e.g. different material(s) and/or length and/or diameter compared to each other. Thus, the electrically conductive fibers can comprise the first portion of fibers comprising first material(s) and the second portion of fibers comprising second material(s). Alternatively, or in addition, the electrically conductive fibers can comprise the first portion of fibers which are made of electrically conductive material(s) and the second portion of fibers which are made by coating fibers with electrically conductive material(s).

The tire of this invention can be conventionally shaped, built, molded and cured by methods known to a person skilled in the art. Particularly, the vulcanization of the tire comprising the electrically conductive short fibers can be conducted by methods known to a person skilled in the art.

### EXAMPLE 1

Tires having electrically conductive cord comprising electrically conductive fibers were prepared. The tires were compared to similar tires comprising electrically conductive cord without the electrically conductive fibers.

The first test was so called Convoy test, which is a field test. More than 15 000 km was driven by using tires having a size of 225/40 R18. The second test was so called Fatigue test, wherein 24 000 km was driven in a drum-type apparatus by using tires having a size of 205/55 R16.

The electrically conductive cords having the electrically conductive fibers had improved fatigue resistance compared to the electrically conductive cords which did not have the electrically conductive fibers.

The electrically conductive cords of those tires which had the electrically conductive fibers had very good fatigue resistance. They were at excellent condition after the tests.

### EXAMPLE 2

Tires having electrically conductive cord comprising electrically conductive fibers were prepared. The tires were compared to similar tires without the electrically conductive cord.

The tires having an electrically conductive cord having Tex values of 100 Tex, 170 Tex and 250 Tex were tested. Electrically conductive fibers had a diameter of 8 µm and a length of 40 mm. The amount of fibers was 22 wt.%, calculated of total weight of the electrically conductive cord. All tested tires having the electrically conductive cord comprising electrically conductive fibers had excellent electrical conductivity having resistance from 1 MΩ to 4 MΩ. The electrical conductivity of the tires without the electrically conductive cord was very poor, resistance of those tires was around 4000 MΩ. The test results are shown in Table 1.

**Table 1**

| Test size: 205/55 R16 | | Electrical conductivity measurement from bead to bead | |
|---|---|---|---|
| Test tire | Tire construction | Measurement 1 | Measurement 2 |
| Tire 1 | Tire **without** electrically conductive cord | 4200MΩ | 4000MΩ |
| Tire 2 | Tire with electrically conductive cord | 2MΩ | 3MΩ |
| Tire 3 | Tire with electrically conductive cord | 3MΩ | 3MΩ |
| Tire 4 | Tire with electrically conductive cord | 1MΩ | 1.4MΩ |
| Tire 5 | Tire with electrically conductive cord | 2.5MΩ | 4MΩ |
| Tire 6 | Tire with electrically conductive cord | 1.6MΩ | 1.6MΩ |
| Tire 7 | Tire with electrically conductive cord | 4MΩ | 2MΩ |
| Tire 8 | Tire with electrically conductive cord | 2.5MΩ | 1.3MΩ |

### EXAMPLE 3

Different amounts of electrically conductive fibers were tested. The electrically conductive cord had excellent conductivity properties having a resistance of less than 5 MΩ from the first bead region to the second bead region in every test point. However, the electrically conductive cords having the electrically conductive fibers had improved fatigue resistance properties. The fatigue resistance properties improved while the amount of electrically conductive fibers was increased. The electrically conductive cord having electrically conductive fibers from 15 wt.% to 50 wt.%, calculated of total weight of the electrically conductive cord, had very good fatigue resistance properties. Best results were shown when the amount of electrically conductive fibers was more than 20 wt.%, calculated of total weight of the electrically conductive cord.

The invention has been described with the aid of illustrations and examples. The invention is not limited solely to the above presented embodiments but may be modified within the scope of the appended claims.

## Claims

1. A pneumatic tire (100) configured to rotate about an axis of rotation (AXR), the tire (100) comprising
- a circumferential tread (120) being configured to form a contact with a surface (900) when the tire (100) is used,
- a circumferential belt layer (140) disposed radially below the tread,
- a first bead region (151) and a second bead region (152), which bead regions (151, 152) are spaced apart, wherein the first bead region (151) has a first mounting surface and the second bead region (152) has a second mounting surface, which mounting surfaces are adapted for mounting the tire on a rim of a wheel,
- a first sidewall (145a) extending between the first bead region (151) and the tread (120) and a second sidewall (145b) extending between the second bead region (152) and the tread (120),
- a carcass ply (155) extending between the first bead region (151) and the second bead region (152), and
- at least one electrically conductive cord (10) comprising electrically conductive fibers, which electrically conductive cord (10) extends from the first bead region (151)
• to said tread (120), and/or
• to said circumferential belt layer (140), and/or
• to said second bead region (152),
thereby providing a path of increased electrical conductivity via the electrically conductive cord (10),
- wherein the electrically conductive fibers have
• a length from 1 mm to 100 mm, preferably from 10 mm to 70 mm,
• a diameter from 1 µm to 100 µm, preferably from 3 µm to 50 µm, and
• preferably a length/diameter ratio from 100 to 10 000.

2. The pneumatic tire according to claim 1, wherein the tread (120) comprises an electrically conductive strip (121), which is preferably an electrically conductive rubber strip.

3. The pneumatic tire according to any of the preceding claims, wherein the amount of the electrically conductive fibers is at least 1 wt.%, preferably at least 5 wt.%, calculated of total weight of the electrically conductive cord.

4. The pneumatic tire according to any of the preceding claims, wherein the electrically conductive fibers of the electrically conductive cord (10) comprise or consist of metals, the amount of the metals being preferably at least 40 wt.% calculated of the total weight of said electrically conductive fibers.

5. The pneumatic tire according to any of the preceding claims, wherein the electrically conductive fibers comprise
- carbon fibers, and/or
- poly aniline fibers, and/or
- other electrically conductive polymer fibers,
wherein the electrically conductive fibers preferably comprise at least 30 wt.% said fibers, calculated of total weight of the electrically conductive fibers.

6. The pneumatic tire according to any of the preceding claims, wherein the fibers have a conductivity between 1.0 x 10³ σ (S/m) at 20°C and 8.0 x 10⁷ σ (S/m) at 20°C, preferably the fibers have a conductivity equal to or more than 1.0 x 10⁵ σ (S/m) at 20°C.

7. The pneumatic tire according to any of the preceding claims, wherein a resistance of the tire from the first bead region (151)
- to the tread (120) and/or
- to the second bead region (152)
is equal to or less than 100 MΩ, preferably equal to or less than 50 MΩ.

8. The pneumatic tire according to any of the preceding claims, wherein the electrically conductive cord (10) is positioned
- on the outer surface of the carcass ply (155), between the carcass ply (155) and a sidewall rubber layer, or
- on the inner surface of the carcass ply (155), between the carcass ply (155) and an innerliner layer (135), or
- between two carcass plies (155), or
- as an integral cord of at least one of the carcass plies (155),
preferably the electrically conductive cord (10) is positioned on the outer surface of the carcass ply (155), between the carcass ply and the sidewall rubber layer.

9. The pneumatic tire according to any of the preceding claims, wherein
- length of the electrically conductive fibers is from 20 mm to 60 mm, and/or
- diameter of the electrically conductive fibers is from 6 µm to 15 µm.

10. The pneumatic tire according to any of the preceding claims, wherein the electrically conductive cord (10) comprises a yarn.

11. The pneumatic tire according to claim 10, wherein
- at least part of the electrically conductive fibers are spirally wound around the yarn, and/or
- at least part of the electrically conductive fibers are at least partly inside the yarn, and/or
- the yarn comprises
• aramid, and/or
• nylon, and/or
• rayon, and/or
• polyester and/or
• cotton and/or
• polysulfone.

12. The pneumatic tire according to any of the preceding claims, wherein an outer surface of the tire is without the electrically conductive cord.

13. The pneumatic tire according to any of the preceding claims, wherein the electrically conductive cord has a Tex value from 10 Tex to 500 Tex.

14. The pneumatic tire according to any of the preceding claims, wherein the electrically conductive fibers are formed by coating fibers with a conductive substance.

15. The pneumatic tire according to claim 14, wherein
- thickness of the coating is form 0.02 mm to 0.1 mm, and/or
- the fibers comprise nylon, rayon, vinylon, polyethylene, polystirene, poly-vinyl chloride, polyvinylidene chloride, aromatic polyamide, polyester such as polyethylene terephthalate (PET), polypropylene, cellulose pulp, plant fibers made of cellulose, glass and/or alumina, preferably the fibers comprise nylon fibers, polyester fibers and/or fibers made from cellulose containing pulp.
